(19) Europäisches Patentamt
European Patent Office
Office européen des brevets

(11) Publication number: **0 532 049 A1**

# (12) EUROPEAN PATENT APPLICATION

(21) Application number: **92115691.5**

(22) Date of filing: **14.09.92**

(51) Int. Cl.5: **C08G 65/32**, C08L 101/10, G03F 7/075, C08K 5/10, C08K 3/00

(30) Priority: **12.09.91 JP 260533/91**

(43) Date of publication of application: **17.03.93 Bulletin 93/11**

(84) Designated Contracting States: **BE CH DE ES FR GB IT LI NL SE**

(71) Applicant: **KANEGAFUCHI KAGAKU KOGYO KABUSHIKI KAISHA**
**2-4 Nakanoshima 3-chome**
**Kita-ku Osaka-shi Osaka 530(JP)**

(72) Inventor: **Iwakiri, Hiroshi**
**4-2-12, Okihama-machi, Takasago-cho**
**Takasago-shi, Hyogo(JP)**
Inventor: **Fujita, Masayuki**
**Kouunryo, 2-63, Okihama-machi, Takasago-cho**
**Takasago-shi, Hyogo(JP)**
Inventor: **Hasegawa, Takashi**
**642-2, Okuni, Nishikanki-cho**
**Kakogawa-shi, Hyogo(JP)**

(74) Representative: **Vossius & Partner**
**Siebertstrasse 4 P.O. Box 86 07 67**
**W-8000 München 86 (DE)**

## (54) Curable composition.

(57) A curable composition comprising, as the essential components, (A) an organic polymer having a group containing a silicon atom bonded to a hydroxyl group and/or a hydrolyzable group and capable of crosslinking by forming a siloxane bond, (B)

a photocurable compound, and (C)

a hindered amine series light stabilizer wherein the amino group is a tertiary amino group.



Rank Xerox (UK) Business Services
(3.10/3.5x/3.0.1)

The present invention relates to a curable composition containing a organic polymer having a group containing silicon atoms bonded to a hydroxyl group and/or hydrolyzable group and capable of crosslinking by forming a siloxane bond (hereinafter referred to as a reactive silicon group).

Organic polymers having reactive silicon atoms are disclosed in JP-A-52-73998 (the term "JP-A" as used herein means an "unexamined published Japanese patent application"), U.S. Patent 3,971,751, etc., and a typical example thereof is a polymer represented by the following general formula

$$X''_3Si \sim\sim (\text{hydroxypropylene polymer}) \sim\sim SiX''_3$$

wherein X" represents a hydrolyzable group such as a methoxy group.

The organic polymer having reactive silicon groups cures by forming siloxane bonds(Si-O-Si) between the polymer molecules by the action of moisture in the air at room temperature as a room-temperature curable silicon rubber to provide a rubbery cured product. Since the cured product has excellent elongation characteristics, strength, adhesive property, etc., the product has been used as sealants, adhesives, etc.

In the case of using the cured product of the organic polymer for the foregoing purposes, it is necessary that the polymer cures quickly and, in particular, the surface of the cured product does not show tackiness.

A technique of improving the surface characteristics (residual tack, etc.,) of the cured product of a reactive silicon group-containing organic polymer by adding a photocurable compound to the polymer is known from U.S. Patent 4,322,272. Also, it is known that a hindered amine series light stabilizer has an effect of improving weather resistance.

However, in the case of using a photocurable compound and a hindered amine series light stabilizer together, there are problems in that gels form upon the production of the composition and the viscosity of the composition is increased during the storage thereof, thereby the effect of using both the components together cannot be effectively obtained.

The object of the present invention is to provide a curable composition containing a reactive silicon-containing organic polymer as the main component, said composition having a good storage stability and giving a cured product having excellent surface characteristics.

This object has been solved by a curable composition using a photocurable compound and a hindered amine series light stabilizer together by selectively using a tertiary amine-containing light stabilizer as the hindered amine series light stabilizer, which composition has a good storage stability and gives a cured product having excellent surface characteristics.

That is, according to the present invention, there is provided a curable composition comprising (A) a reactive silicon group-containing organic polymer, (B) a photocurable compound and (C) a hindered amine series light stabilizer wherein the amino group is a tertiary amino group, as the essential components.

As examples of reactive silicon groups of component (A) of the curable composition of the present invention, there are groups represented by the following formula (I);

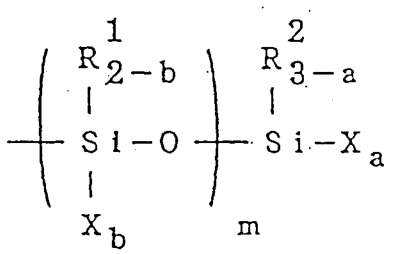

(I)

wherein $R^1$ and $R^2$ each represents an alkyl group having from 1 to 20 carbon atoms, an aryl group having from 6 to 20 carbon atoms, an aralkyl group having 7 to 20 carbon atoms, or a triorganosiloxy group shown by $(R')_3SiO$- (wherein R' represents a monovalent hydrocarbon group having from 1 to 20 carbon atoms and three R's may be the same or different), when two or more $R^1$s or $R^2$s exist, they may be the same or different; X represents a hydroxyl group or a hydrolyzable group and when two or more Xs exist, they may be the same or different; "a" represents an integer of from 0 to 3; "b" represents an integer of from 0 to 2; "b"s in the "m" groups shown by the following formula;

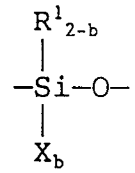

may be the same or different; and "m" represents an integer of from 0 to 19, said "a" and "b", however, satisfying the relationship: $a + \Sigma b \geqq 1$.

There is no particular restriction on the hydrolyzable group shown by foregoing X and it may be a conventionally known hydrolyzable group. Specific examples of the hydrolyzable group are a hydrogen atom, a halogen atom, an alkoxy group, an acyloxy group, a ketoximate group, an amino group, an amido group, an acid amido group, an aminoxy group, a mercapto group, and an alkenyloxy group.

In these groups, a hydrogen atom, an alkoxy group, an acyloxy group, a ketoximate group, an amino group, an amido group, an aminohydroxy group, a mercapto group, and an alkenyloxy group are preferred, and from the view point that the hydrolyzability is mild and the compound is easily handled, an alkoxy group such as methoxy, etc., is particularly preferable.

The number of the hydrolyzable group bonded to one silicon atom may be from 1 to 3 and $(a + \Sigma b)$ is preferably from 1 to 5. When two or more hydrolyzable groups or hydroxyl groups exist in the reactive silicon groups, they may be the same or different.

The number of silicon atoms existing in the reactive silicon group may be one or two or more and in the case of the reactive silicon groups bonded to silicon atoms by siloxane bonds, etc., the number of silicon atoms may be about 20.

In addition, the reactive silicon groups shown by the following formula are preferable from a point of being easily available;

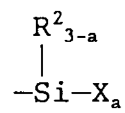

wherein $R^2$, X, and a are same as described above.

Also, specific examples of $R^1$ and $R^2$ in formula (I) described above are an alkyl group such as methyl, ethyl, etc.; a cycloalkyl group such as cyclohexyl, etc.; an aryl group such as benzyl, etc.; and a triorganosiloxy group shown by $(R')_3SiO$- wherein R' is methyl, phenyl, etc. $R^1$, $R^2$, and R' each is particularly preferably a methyl group.

It is preferred that at least one, and preferably from 1.1 to 5 reactive silicon groups exist in one organic polymer molecule. If the number of the reactive silicon groups contained in one organic polymer molecule is less than one, the curability of the curable composition becomes insufficient and a good rubbery elastic behavior is difficult to obtain.

The reactive silicon groups may exist at the terminal of the molecular chain of an organic polymer or may exist in the inside thereof. When the reactive silicon group exist at the terminal of the molecular chain, the amount of the effective network chains of the organic polymer component contained in a finally formed cured product is increased, whereby a rubbery cured product showing a high strength, a high elongation, and a low elasticity is readily obtainable.

Examples of the main chain of the organic polymer of component (A) in the present invention are polyoxyalkylene series polymers such as polyoxyethylene, polyoxypropylene, polyoxytetramethylene, a polyoxyethylene-polyoxypropylene copolymer, etc.; polyester series polymers obtained by the condensation of a dibasic acid such as adipic acid, etc., and a glycol obtained by the ring-opening polymerization of a lactone; an ethylene-propylene copolymer; polyisobutylene; a copolymer of isobutylene and isoprene, etc.; polychloroprene; polyisoprene; a copolymer of isoprene and butadiene, acrylonitrile, styrene, etc.; a polyolefinic polymer obtained by hydrogenating polyisoprene, polybutadiene, or a copolymer of isoprene or butadiene and acrylonitrile, styrene, etc.; a polyacrylic acid ester obtained by radical-polymerizing a monomer such as ethyl acrylate, butyl acrylate, etc.; an acrylic acid ester series copolymer of an acrylic

acid ester such as ethyl acrylate, butyl acrylate, etc., and vinyl acetate, acrylonitrile, methyl methacrylate, styrene, etc.; graft polymers obtained by polymerizing a vinyl monomer in the foregoing organic polymers; a polysulfide series polymer; and polyamide-series polymers such as nylon 6 obtained by a ring-opening polymerization of ϵ-aminocaprolactam, nylon 6•6 obtained by the condensation polymerization of hexamethylenediamine and adipic acid; nylon 6•10 obtained by the condensation polymerization of hexamethylenediamine and dibasic acid; nylon 11 obtained by the condensation polymerisation of ϰ-aminoundecanoic acid; nylon 12 obtained by the ring-opening polymerization of λ-aminolaurolactam; a copolymer nylon having two or more components in the foregoing nylons, etc.

In the foregoing polymers, a polyoxyalkylene series polymer is preferred and a polyoxypropylene series polymer is particularly preferred.

Practical examples of the reactive silicon group-organic polymer which can be used in the present invention are described in JP-A-50-156599, JP-A-54-6096, JP-A-57-126823, JP-A-59-78223, JP-A-55-82123, JP-A-55-131022, JP-A-55-137129, JP-A-62-230822, JP-A-63-83131, JP-A-3-47825, JP-A-3-72527, and JP-A-3-122152, U.S. Patents 3,632,557, 4,345,053, 4,366,307, 4,960,844, etc.

In the reactive silicon group-containing organic polymers described above, a polymer wherein the main chain is polyoxyalkylene having from 1 to 4 carbon atom and the reactive silicon group preferably is an alkoxysilyl group and further the reactive silicon group-containing organic polymer wherein the main chain is polyoxypropylene and the reactive silicon group is a dimethoxymethylsilyl group [$-Si(CH_3)-(OCH_3)_2$] is particularly preferable.

A photocurable compound is a compound in which the molecular structure undergoes a chemical change by the action of light in a considerably short time to cause a physical change such as curing, etc. As such a compound, there are known many compounds such as organic monomers, oligomers, resins, compositions containing such compounds, etc., and in the present invention, commercially available optional compounds can be used. Typical examples of the compounds are unsaturated acrylic compounds, polyvinyl cinnamates, and azido resins.

The unsaturated acrylic compounds are monomers and oligomers each having from 1 to several acrylic or methacrylic unsaturated groups or mixtures of them, and practically such monomers as propylene (or butylene, ethylene, etc.) glycol di(meth)acrylate, neopentyl glycol di(meth)acrylate, etc., and the oligoesters thereof having a molecular weight of not more then 10,000.

The polyvinyl cinnamates are photosensitive resins having a cinnamoyl group as a photosensitive group and there are known the polymers formed by esterifying polyvinyl alcohol with cinnamic acid and many polyvinyl cinnamic acid derivatives.

The azido resins are known as photosensitive resins having an azido group as a photosensitive group, and there are ordinary photosensitive rubber liquids containing a dioxide compound as a photosensitizer and those described in detail in Kankosei Jushi (Photosensitive Resin), pages 93 et seq., 106 et seq., and 117 et seq., published by Insatu Gakkai Shuppan Bu, March, 1972. They may be used singly or as a mixture thereof or, if necessary, can contain a sensitizer.

In the present invention, an oligomer having an acryl group and/or a methacryl group is preferably used as photocurable compound, and further an oligomer having at least 2 acryl and/or methacryl groups, in average, per one molecule is particularly preferable. The photocurable compound is effective for improving the surface characteristics of the cured product of the curable composition of the present invention and also is effective for improving the residual tack and the weather resistance of the cured product.

Practical examples of the photocurable compound are Aronix M-101, M-102, M-111, M-113, M-114, M-117, M-120, and M-152, which are specific acrylates (mono-functional);, Aronix M-150 which is N-vinyl-2-pyrrolidone; Aronix M-210, M-215, M-220,M-233, M-240, and M-245, which are specific acrylates (difunctional); Aronix M-305, M-309, M-310, M-315, M-320, and M-325, which are specific acrylates, and Aronix M-400 which is a specific acrylate (poly-functional). (The foregoing unsaturated acrylic compounds are commercially available as the trade marks of Aronix type from Toagosei Chemical Industry Co., Ltd.).

It is preferable that the photocurable compound is used in the range of from 0.5 to 10 parts by weight to 100 parts by weight of the reactive silicon group-containing organic polymer as component (A). If the amount of the photocurable compound is less than 0.5 part by weight, the effect of the surface improvement is less, while if the amount is over 100 parts by weight, the photocurable compound gives undesirably bad influences on the mechanical properties of the cured product of the curable composition of the present invention.

It is known that a hindered amine series light stabilizer improves the weather resistance of a resin containing a light stabilizer by a composite mechanism and the effect has been also confirmed for component (A). However, in a three-component system formed by adding the hindered amine series light stabilizer to a composition composed of component (A) and component (B), there was a problem that the

viscosity of the component was increased during the storage thereof, and the composition gelled although the detailed reason thereof has not yet been clarified.

As the result of various investigations for solving the foregoing problem, the inventors have discovered that the foregoing problem can be solved by specifying the kind of the hindered amine series light stabilizer being used.

The hindered amine series light stabilizer which can be used in this invention contains a tertiary amino group as the amino group and practical examples thereof are TINUVIN 622LD, TINUVIN 144, CHIMASSORB 944LD, and CHIMASSORB 119FL (trade marked products made by CIBA-CEIGY (Japan) Limited); MARK LA-57, MARK LA-62, MARK LA-67, MARK LA-63, and MARK LA-68 (trade marked products made by Adeka Argus Chemical Co., Ltd.); SANOL LS-770, SANOL LS-765, SANOL LS-292, SANOL LS-2626, SANOL LS-1114, and SANOL LS-744 (trade marked products made by Sankyo Company, Limited), etc.

It is preferable that the amount of the hindered amine series light stabilizer for use in this invention is in the range of from 0.1 to 5 parts by weight to 100 parts by weight of component (A). If the amount thereof is less than 0.1 part by weight, the effect of improving the weather resistance of the cured product of the curable composition of the present invention is less, while if the amount is over 5 parts by weight, the further effect is not obtained and hence the use of such a large amount is economically disadvantageous.

The curable composition of the present invention can properly contain, if necessary, various additives such as a filler, a plasticizer, a curing catalyst, an adhesion improving agent, a property controlling agent, a storage stability improving agent, a ultraviolet absorbent, a low molecular silicon compound, a metal inactivating agent, an ozone deterioration inhibitor, a phosphorus series peroxide decomposing agent, a lubricant, a pigment, a foaming agent, etc., in addition to the foregoing 3 components.

The following examples are intended to illustrate the present invention practically but not to limit it in any way. Unless otherwise indicated, all parts, percents and ratios are by weight.

## EXAMPLES 1 TO 3 AND COMPARATIVE EXAMPLES 1 AND 2

A polyoxypropylene polymer having a $(CH_3O)_2Si(CH_3)CH_2CH_2CH_2$- group comprising 85% of all terminal chains and a number average molecular weight of 9,000 (measured by gel permeation chromatography) (polymer A) was mixed with the compounding ingredients shown in Table 1 below to provide a two-component type main agent.

After storing the main agents in a container for one month at 50 °C, the properties of each main agent were confirmed.

Apart from this, a sufficiently dispersed mixture of 30 parts by weight of tin octylate, 5 parts by weight of laurylamine, 65 parts by weight of dioctyl phthalate, and 200 parts by weight of titanium oxide was prepared. Then, by mixing 10 parts by weight of the mixture thus obtained with 100 parts by weight of the foregoing each main agent, each curable composition was prepared. Each of the curable compositions was formed into a sheet and the sheet was cured for 7 days at normal temperature and then for 7 days at 50 °C to provide each cured product sheet (thickness: about 3 mm).

After irradiating each cured sheet with Sunshine Weather-ometer (WEL-SUN-HCH-B type, manufactured by Suga Test Instruments Co., Ltd.) for 2,000 hours, the deteriorated extent of the surface thereof was visually observed.

The results obtained are shown in Table 1.

Table 1

| | Example 1 | Example 2 | Example 3 | Comparative Example 1 | Comparative Example 2 |
|---|---|---|---|---|---|
| Polymer A | 100 | 100 | 100 | 100 | 100 |
| Collidal Calcium Carbonate (partcle size: 0.08 µm) Surface-Treated with Higher Fatty Acid | 120 | 120 | 120 | 120 | 120 |
| Dioctyl Phthalate | 55 | 55 | 55 | 55 | 55 |
| Hydrogenated Costor Oil | 6 | 6 | 6 | 6 | 6 |
| Titanium Oxide | 20 | 20 | 20 | 20 | 20 |
| Photocurable Compound | Aronix M8060 5 | Aronix M8060 5 | Aronix M8060 5 | Aronix M8060 5 | 0 |
| Hindered amine Series Light Stabilizer | Tinuvin 144 1 | Tinuvin 144 1 | Tinuvin 144 1 | LS770 1 | LS770 1 |

Table 1 (cont'd)

| | Example 1 | Example 2 | Example 3 | Comparative Example 1 | Comparative Example 2 |
|---|---|---|---|---|---|
| Benzotriazole Series Ultraviolet Absorbent | Tinuvin 327 1 | Tinuvin 327 1 | Tinuvin 327 1 | Tinuvin 327 1 | Tinuvin 327 1 |
| Hindered Phenol Series Antioxidant | NS-6 1 | NS-6 1 | NS-6 1 | NS-6 1 | NS-6 1 |
| Storage Stability(*1) (50°C x 1 month) | A | A | A | B | A |
| Surface Weather Resistance(*2) (Sunshine Weather-ometer 2000H) | A | A | A | A | B |

Evaluation standard in Table 1:

(*1): Viscosity increasing ratio: A was less than 1.5, B was 1.5 times or more.

(*2): A sample wherein the occurrence of hair cracks was not observed was defined as A and a sample wherein the occurrence thereof was clearly observed was defined as B.

(Evaluations in Tables 2 and 3 are also same as above.)

EXAMPLES 4 TO 6 AND COMPARATIVE EXAMPLES 3 AND 4

By following the same procedures as the cases of Examples 1 to 3 and Comparative Examples 1 and 2 using a polyoxypropylene polymer having $(CH_3O)_2Si(CH_3)CH_2CH_2CH_2$- at 85% of the whole terminals thereof, a number average molecular weight of 17,000 (measured by gel permeation chromatography), and a molecular weight distribution (Mw/Mn) of 1.3 (polymer B), each two-component type main agent was

prepared.

After storing the main agents in a container for one month at 50°C, the properties thereof were determined.

Furthermore, in the same way as in the cases of Examples 1 to 3 and Comparative Examples 1 and 2, curable compositions were prepared and using each of the curable compositions, each cured product sheet (thickness: about 3 mm) was prepared.

After irradiating each cured sheet with the Sunshine Weather-ometer for 2,000 hours, the deteriorated extent of the surface thereof was visually observed.

The results obtained are shown in Table 2.

Table 2

| | Example 4 | Example 5 | Example 6 | Comparative Example 3 | Comparative Example 4 |
|---|---|---|---|---|---|
| Polymer B | 100 | 100 | 100 | 100 | 100 |
| Collidal Calcium Carbonate (particle size: 0.08 μm) Surface-Treated with Higher Fatty Acid | 120 | 120 | 120 | 120 | 120 |
| Dioctyl Phthalate | 55 | 55 | 55 | 55 | 55 |
| Hydrogenated Castor Oil | 6 | 6 | 6 | 6 | 6 |
| Titanium Oxide | 20 | 20 | 20 | 20 | 20 |
| Photocurable Compound | Aronix M-400 5 | Aronix M-400 5 | Aronix M-400 5 | Aronix M-400 5 | Aronix M-710 |
| Hindered amine Series Light Stabilizer | Tinuvin 144 1 | MARK LA62 1 | MARK LA63 1 | CHIMASS ORB 944 1 | CHIMASS ORB 944 1 |

Table 2 (cont'd)

| | Example 4 | Example 5 | Example 6 | Comparative Example 3 | Comparative Example 4 |
|---|---|---|---|---|---|
| Benzotriazole Series Ultraviolet Absorbent | Tinuvin 327 1 | Tinuvin 327 1 | Tinuvin 327 1 | Tinuvin 327 1 | Tinuvin 327 1 |
| Hindered Phenol Series Antioxidant | NS-6 1 | NS-6 1 | NS-6 1 | NS-6 1 | NS-6 1 |
| Storage Stability (50°C x 1 month) | A | A | A | B | B |
| Surface Weather Resistance (Sunshine Weather-ometer 2000H) | A | A | A | A | A |

EXAMPLES 7 TO 9 AND COMPARATIVE EXAMPLES 5 AND 6

By following the same procedures as the cases of Examples 1 to 3 and Comparative Examples 1 and 2 using a polyoxypropylene polymer having $(CH_3O)_2Si(CH_3)CH_2CH_2CH_2NHC(O)\text{-}O\text{-}$, a number average molecular weight of 20,000 (measured by gel permeation chromatography), and a molecular weight distribution (Mw/Mn) of 1.3 (polymer C), each two-component type main agent was prepared.

After storing the main agents in a container for one month at 50°C, the properties thereof were determined.

Furthermore, in the same way as in the cases of Examples 1 to 3 and Comparative Example 1 and 2, curable compositions were prepared and using each of the curable compositions, each cured product sheet (thickness: about 3 mm) was prepared.

After irradiating each cured sheet with the Sunshine Weather-ometer, the deteriorated extent of the surface thereof was visually observed.

The results obtained are shown in Table 3.

Table 3

| | Example 7 | Example 8 | Example 9 | Comparative Example 5 | Comparative Example 6 |
|---|---|---|---|---|---|
| Polymer C | 100 | 100 | 100 | 100 | 100 |
| Higher Fatty Acid-Treated Colloidal Calcium Carbonate (particle size: 0.08 µm) / Heavy Calcium Carbonate | 100/20 | 100/20 | 100/20 | 100/20 | 100/20 |
| Dioctyl Phthalate/ Epoxylated Soybean Oil | 35/20 | 35/20 | 35/20 | 35/20 | 35/20 |
| Hydrogenated Costor Oil | 6 | 6 | 6 | 6 | 6 |
| Titanium Oxide | 20 | 20 | 20 | 20 | 20 |
| Photocurable Compound | Aronix M8060 5 | Aronix M309 5 | Aronix M400 5 | Aronix M400 5 | Aronix M400 5 |
| Hindered amine Series Light Stabilizer | Sanol LS292 1 | Tinuvin 144 1 | MARK LA63 1 | Sanol LS770 1 | MARK LA68 1 |

Table 3 (cont'd)

| | Example 7 | Example 8 | Example 9 | Comparative Example 5 | Comparative Example 6 |
|---|---|---|---|---|---|
| Benzotriazole Series Ultraviolet Absorbent | Tinuvin 327 1 | Tinuvin 327 1 | Tinuvin 327 1 | Tinuvin 327 1 | Tinuvin 327 1 |
| Hindered Phenol Series Antioxidant | NS-6 1 | NS-6 1 | NS-6 1 | NS-6 1 | NS-6 1 |
| Storage Stability (50°C x 1 month) | A | A | A | B | B |
| Surface Weather Resistance (Sunshine Weather-ometer 2000H) | A | A | A | A | A |

The curable composition of the present invention shows excellent surface characteristics and storage stability as various sealants and adhesives for buildings, motor cars, etc. They are particulary useful as an excellent sealant.

While the invention has been described in detail and with reference to specific embodiments thereof, it will be apparent to one skilled in the art that various changes and modifications can be made therein without departing from the spirit and scope thereof.

## Claims

1. A curable composition comprising, (A) an organic polymer having a group containing a silicon atom bonded to a hydroxyl group and/or a hydrolyzable group and capable of crosslinking by forming a siloxane bond, (B) a photocurable compound, and (C) a hindered amine series light stabilizer wherein the amino group is a tertiary amino group.

2. A curable composition according to claim 1, wherein the composition comprises, in part by weight, 100 parts of (A), from about 0.5 to about 10 parts of (B), and from about 0.1 to about 5 parts of (C).

3. The curable composition of claim 1 or 2, wherein the main chain of the organic polymer as component (A) is substantially a polyoxyalkylene polymer.

4. The curable composition of claim 3, wherein the main chain of the organic polymer as component (A) is substantially a polyoxypropylene.

5. The curable composition of any one of claims 1 to 4, wherein the group containing a silicon group bonded to a hydroxyl group and/or a hydrolyzable group and capable of crosslinking by forming a siloxane bond is a group represented by following formula (I);

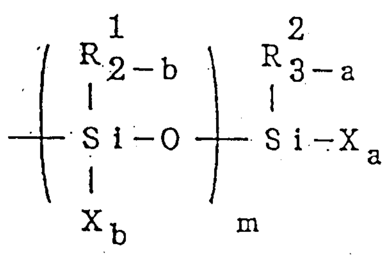

(I)

wherein $R^1$ and $R^2$ each represent

an alkyl group having from 1 to 20 carbon atoms, an aryl group having from 6 to 20 carbon atoms, an aralkyl group having from 7 to 20 carbon atoms, or a triorganosiloxy group shown by $(R')_3SiO$- (wherein R' represents a monovalent hydrocarbon group having from 1 to 20 carbon atoms and three R's may be the same or different), when two or more $R^1$s or $R^2$s exist, they may be the same or different; X represents

a hydroxyl group or a hydrolyzable group and, when two or more Xs exist, they may be the same or different; "a" represents an integer of from 0 to 3; "b" represents an integer of from 0 to 2 and "b"s in the "m" groups of;

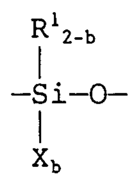

may be the same or different; and "m" represents an integer of from 0 to 19, said "a" and "b", however, satisfying the relationship a + $\Sigma b \geqq 1$.

6. The curable composition of claim 5, wherein the group containing a silicon atom bonded to a hydroxyl group and/or a hydrolyzable group and capable of crosslinking by forming a siloxane bond is a group represented by the following formula;

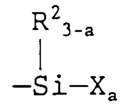

wherein $R^2$, X, and "a" are same as described in claim 5.

**7.** The curable composition of any one of claims 1 to 6, wherein the photocurable compound is an oligomer having an acryl and/or methacryl group.

European Patent Office

# EUROPEAN SEARCH REPORT

Application Number

EP 92 11 5691

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 927 807 (KANEGAFUCHI KAGAKU KKK)<br>* claims 1,5,7 *<br>--- | 1,3,4-6 | C08G65/32<br>C08L101/10<br>G03F7/075<br>C08K5/10<br>C08K3/00 |
| X | EP-A-0 147 127 (IBM)<br>* claims 1,7,8,9,17,18 *<br>--- | 1,2,5,6 | |
| X | EP-A-0 228 087 (TORAY SILICONE CO. LTD.)<br>* page 13, line 31; claims 1,4,5 *<br>--- | 1-3,5,6 | |
| A,D | EP-A-0 035 049 (KANEFUCHI KAGAKU KKK)<br>* claims 1,10 *<br>--- | 1-7 | |
| A | EP-A-0 229 678 (ENICHEM)<br>* claim 1 *<br>* page 3, line 37 - line 41 *<br>* page 3, line 59 - line 61 *<br>* page 4, line 43 *<br>--- | 1-6 | |
| A | DE-A-0 434 080 (ATOCHEM NORTH AMERICA INC.)<br>* claims 1,21,22 *<br>--- | 1 | TECHNICAL FIELDS SEARCHED (Int. Cl.5) |
| A | US-A-411 769 (STUEBEN K.C.)<br>* claim 1 *<br>* column 3, line 36 - line 44 *<br>----- | 1 | C08L<br>G03F<br>C08K<br>C08G |

The present search report has been drawn up for all claims

| Place of search | Date of completion of the search | Examiner |
|---|---|---|
| THE HAGUE | 18 NOVEMBER 1992 | O'SULLIVAN T.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)